# EUROPEAN PATENT SPECIFICATION

(11) **EP 1 360 561 B1**
(45) Date of publication and mention of the grant of the patent: **22.11.2017**
(21) Application number: 01989232.2
(22) Date of filing: 12.12.2001
(51) Int. Cl.: G06F 1/00

(54) **SYSTEM AND METHOD FOR BOUNDING THE LIFE OF AN EVENT SUBSCRIPTION TO THE AVAILABILITY OF AN OBJECT**
SYSTEM UND VERFAHREN ZUR BEGRENZUNG DER LEBENSDAUER EINES EREIGNISABONNEMENTS AUF DIE VERFÜGBARKEIT EINES OBJEKTS
SYSTEME ET PROCEDE POUR RELIER LA VIE D'UN ABONNEMENT A UN EVENEMENT A LA DISPONIBILITE D'UN OBJET

(30) Priority: 12.12.2000 US 254890 P; 11.12.2001 US 21815
(43) Date of publication of application: 12.11.2003
(73) Proprietor: Oracle International Corporation, Redwood Shores, CA 94065 (US)
(72) Inventor: FLEMING, Robert M., Concord, MA 01742 (US); MOREAU, Thomas, O., Candia, New Hampshire 03034 (US)
(74) Representative: D Young & Co LLP
(86) International application number: PCT/US2001/048944
(87) International publication number: WO 2002/056137

(56) References cited:
- WO-A-00/36542
- WO-A-01/86423
- US-A- 4 799 156
- US-A- 5 781 737
- US-A- 6 119 101
- CHANG J-M ET AL: "RELIABLE BROADCAST PROTOCOLS" ACM TRANSACTIONS ON COMPUTER SYSTEMS, NEW YORK, NY, US, vol. 2, no. 3, August 1984 (1984-08), pages 251-273, XP000828443 ISSN: 0734-2071

## Description

### Field of the Invention:

The invention relates generally to event notification mechanisms for use in transactional servers.

### Background:

Distributed Object Oriented (OO) systems include the Tuxedo and WebLogic server products developed by BEA Systems, Inc., San Jose, California. In such types of systems, many types of system problems make it difficult, if not impossible, to distinguish between the following two cases:
- An object ceases to exist and the system hosting it is unreachable.
- An object exists but the system hosting it is currently unreachable.

System problems can include such factors as server computer failure, software processing errors, or an actual physical failure in the communications medium or link connecting the OO client to the object server and its associated events handlers. Objects that subscribe to such events and are then terminated create orphaned subscriptions. These orphaned subscriptions consume system resources and generate system overhead, which leads to an overall degradation in the system performance. The degradation typically continues until outside intervention is used to detect and cancel the orphaned subscription. Such intervention typically requires the skills of an experienced system administrator, and often results in system downtime and a less than optimal use of resources.

The Tuxedo product referred to herein is described in detail in the "BEA TUXEDO Reference Manual", herein incorporated by reference. The Object Management Group (OMG) Notification Service specification is described in detail in "Notification Service: OMG Technical Committee Document. telecom/98-06-15", herein incorporated by reference. The Common Object Request Broker (CORBA) architecture is described in detail in "The Common Object Request Broker: Architecture and Specification, Revision 2.2, February 1998", herein incorporated by reference. The CORBA Event Service specification is described in detail in "CORBAservice: chapter 4, Event Service Specification, March 1997", herein incorporated by reference.

A prior publication WO01/86423 discloses a system and method for providing a message-based leasing of resources in a distributed computing environment. Another publication WO00/36542 teaches a scaleable enterprise computer system that provides transaction security as well as subscription filtering.

### Summary:

Roughly described, the invention provides a method for defining a Quality of Service (QOS) for a subscription that mandates an automatic cancellation of the subscription when the object subscriber becomes unreachable. In one embodiment this QOS may be specified as transient. When a subscription with a QOS of transient is created the event system takes the following steps:
- Periodically determine if the object is reachable.
- If the object is reachable then do nothing.
- If the object is unreachable then cancel the subscription.

The system provided by the invention can be illustrated by analogy to a real-world subscription based service. Consider the scenario in which a mail order catalog company sends out catalogs to its mailing list customers every month. On occasion someone on that mailing list may move or relocate, and never inform the company of their change of address. If the catalogs are always sent by bulk mail then the post office will never tell the company if the catalogs are actually delivered are not.

Most companies in this situation would like to keep their costs down and not send out catalogs that end up being undelivered to their proper destination. To tackle this they might employ a method such as, every January, instead of sending out catalogs by bulk mail, send them out by some form of certified mail whereby the post office is required to tell the company if the catalog was successfully delivered or not. The company could then drop any customers from the mailing list whom the post office has determined and informed that they couldn't deliver the catalog to.

This is analogous to the system provided by the invention. In accordance with an embodiment of the invention, when an events subscriber subscribes for a particular set of events (that is, when a customer requests to be put on a "mailing list"), the subscriber tells an events delivery system if the events should be delivered reliably (that is, by "certified mail"), or by best effort (that is, by "bulk mail").

If a subscriber signs up for best effort delivery, an event channel (e.g. the "company" sending out catalogs) sends the events to the subscriber using one way messages (that is, by "bulk mail"), because it's fast and doesn't consume many system resources. However, because of the way most traditional subscription based systems (including CORBA) work, the channel is never told if the subscriber has gone away, so the channel can't automatically get rid of the subscription. Instead, the channel ends up wasting a lot of time sending events to subscribers who no longer exist (such as the analogy in which mail catalogs are sent to customers who have moved or died).

The invention addresses the dead subscription issue by, instead of always sending one way messages ("bulk mail") to subscribers, the events channel occasionally sends two way messages ("certified mail"). If the two way message can't be delivered, then the channel assumes the subscription has died and automatically removes it. A side effect of this method is that the two way message could fail either because the subscriber is gone forever, or because there is a temporary problem (such as a network problem). In either case the channel can't tell the difference, so it just drops the subscription. To counter this, a best effort subscriber, being aware that the subscription might get dropped because e.g., the network is down, should periodically renew their subscription to ensure reliable reception of events.

The advantage of this solution is that it automatically purges the event system of orphaned subscriptions, unlike the prior solutions requiring manual intervention to detect and cancel such orphaned subscriptions. For each event being delivered for a particular subscription, it can get expensive for the service to obtain the callback object reference repeatedly.

A subscription cache, which in one embodiment is an in-memory map of subscription identifiers (id's) to callback object references, helps to implement the delivery of events more efficiently. Each callback server (nts_cb server) uses its own subscription cache to speed up the lookup of the callback for a subscription. Based on command line options, the callback nts_cb server creates a subscription cache with the following parameters:
- Maximum (max) number of subscription entries in the cache.
- Maximum number of one-way calls to deliver events to transient subscribers
- Maximum time in seconds between two-way calls to deliver events to transient subscribers.

In accordance with one embodiment of the invention, each cache entry holds the subscription id, and a corresponding callback object reference.

If this is a transient subscription, the following two additional fields are maintained: a) a timestamp of the last two-way call attempted to deliver an event for this subscription; and b) the count of the one-way calls attempted since the last two-way call. Since the nts_cb server sets up a fixed size cache, an entry for a particular subscription id if added, will be inserted in a corresponding slot. If an entry previously exists in the slot that a new subscription cache entry is being inserted, the previous entry is bumped off.

### SUBSCRIPTION CALLBACK LOOKUP

Each time the Event Notification Service (or simply the Event Service) looks to find the callback object reference, it checks to locate an entry for this subscription id in the nts_cb server's subscription cache. If there is no cache entry for this subscription, then the Event Notification Service performs the following steps.
- It finds the callback object reference from the subscription blob, as described in the previous section.
- Inserts a new entry for this subscription id in the subscription cache.
- If this is a transient subscription, the last_two_way_time is initialized to the current time and the one_way_call_count set to 0, so as to set up a two-way call.

If a cache entry does exist for this subscription, then the callback object reference is readily available.

When dealing with a Transient Subscription, each subsequent lookup for a certain subscription id determines whether the next call to deliver an event to the callback ought to be a two-way or one-way, based on the cache parameters. After each two-way call, subsequent calls to deliver the event to that subscriber will be one-way, until either the max time between two-way calls has elapsed or the max number of one-way calls has been reached. If this is a two-way call the oneway_count is set to 0 and the last_twoway_time set to the current time. If this is a one-way call, the oneway_count is incremented and last_twoway_time left unaltered. A lookup is made on the subscription cache for this subscription. If the lookup determines this ought to be a two-way call, push_structured_event is directly invoked to deliver the event. If an error occurs during this invoke, the subscription is dropped, and the corresponding cache_entry is removed. If this must be a one-way call however, then DII is use to invoke push_structured_event and deliver the event. Since a one-way call was used, the system cannot tell if the event was delivered or not. Therefore, there is no need to cleanup dead subscriptions until the next two-way call. Having obtained the callback object corresponding to the subscription id, the event is delivered to the callback.

When dealing with a Persistent Subscription, two-way calls are always used to deliver events to callbacks. A lookup is made on the subscription cache for this subscription. At this point the transaction is suspended. A two-way call (push_structured_event) is directly invoked to deliver the event. The current transaction is then resumed. If an error denoting that the object no longer exists is returned when the event is invoked using a push_structured_event, the subscription is dropped, and the corresponding cache_entry is removed. Having obtained the callback object corresponding to the subscription id, the event is delivered to the callback.

In one embodiment the invention comprises a method for maintaining an event-based subscription by a subscriber to an events notification service, comprising the steps of defining a set of delivery variables that define standards for even delivery and administrative limits, wherein the delivery variables and administrative limits are associated with a subscription to an events notification service; receiving events from a posting client application and communicating said events to said subscriber client application; subscribing to events delivered by said events notification service via said subscription; using a subscription cache to deliver the events wherein the subscription cache includes a map of subscription identifiers to callback object references, and wherein said subscription cache is stored on a persistent storage device; periodically checking the delivery of said events to said subscriber in accordance with said administrative limits; and if said periodic checking of delivery of events indicates a failure in delivery then canceling the subscription.

In another embodiment the invention comprises an event server system for maintaining an event-based subscription by a subscriber client application to an event notification and bounding the life of said event-based subscription to the availability of a software object at said subscriber client, comprising a set of delivery variables that define standards for even delivery and administrative limits, wherein the delivery variables and administrative limits are associated with a subscription to an events notification service; an events server for receiving events from a posting client application and communicating said events to said subscriber client application; an events broker in communication with said event server, for handling a request for a subscription from a subscriber for event notifications and matching the notification of said events to said subscribers via an event service; an events service in communication with said events broker for delivering events to an object at said subscriber client application, and periodically verifying delivery of said event in accordance with administrative limits associated with said subscription; and a subscription cache used by the events service to deliver the events wherein the subscription cache includes a map of subscription identifiers to callback object references, and wherein said subscription cache is stored on a persistent storage device; an events check timer, for maintaining a number of event deliveries, and communicating said number of event deliveries to said events service for use in said periodically verifying delivery.

In a further embodiment the invention comprises computer-readable instructions for bounding the life of an event-based subscription to the availability of an object on an event server, which when read and executed by a computer cause said computer to perform the steps of defining a set of delivery variables that define standards for event delivery and administrative limits, wherein the delivery variables and administrative limits are associated with said subscription to an events notification service; receiving events from a posting client application and communicating said events to said subscriber client application; subscribing to events delivered by said events notification service via said subscription; using a subscription cache to deliver the events wherein the subscription cache includes a map of subscription identifiers to callback object references, and wherein said subscription cache is stored on a persistent storage device; periodically checking the delivery of said events to said subscriber, in accordance with said administrative limits; and if said periodic checking of delivery of events indicates a failure in delivery then canceling the subscription.

### Brief Description of the Drawings:

**Figure 1** is a schematic of an Event Server system, including event suppliers or poster and event consumers or subscribers, in accordance with an embodiment of the invention.
**Figure 2** is a flowchart of a subscription selection process in accordance with an embodiment of the invention.
**Figure 3** is a schematic of an Event Service in accordance with an embodiment of the invention.
**Figure 4** is a schematic of a dual server Event Service in accordance with an embodiment of the invention.
**Figure 5** is a schematic of a transient subscription mechanism in accordance with an embodiment of the invention.
**Figure 6** is a flowchart of a transient subscription termination process in accordance with an embodiment of the invention.
**Figure 7** is a flowchart of a transient subscription verification process in accordance with an embodiment of the invention.
**Figure 8** is a schematic of a persistent subscription mechanism in accordance with an embodiment of the invention.
**Figure 9** is a schematic of a subscription database in accordance with an embodiment of the invention.

### Detailed Description:

The invention will now be described with reference to the accompanying drawings. Roughly described, the invention provides a method for an Event Notification Service, an Event Service, or a Notification Service to bind the life of a particular event subscription to the availability of an object which the event depends on for proper transmission. Notification Services are used by distributed servers, such as CORBA servers, examples of which are the Tuxedo and WebLogic Enterprise servers from BEA Systems, Inc.. Their primary purpose is to notify users, applications, processes, other systems, and equivalent entities, commonly referred to as "subscribers," of events which those subscribers need or have requested notification of. Notification Services are described in detail in the OMG Notification Service Specification published by the OMG.

In accordance with an embodiment of the invention, when an events subscriber subscribes for a particular set of events, the subscriber tells an events delivery system if the events should be delivered reliably, or by best effort. If a subscriber signs up for best effort delivery, an event channel sends the events to the subscriber using one way messages, because it's fast and doesn't consume many system resources. However, because of the way most traditional subscription based systems (including CORBA) work, the channel is never told if the subscriber has gone away, so the channel can't automatically get rid of the subscription. Instead, the channel ends up wasting a lot of time sending events to subscribers who no longer exist. The invention addresses the dead subscription issue by, instead of always sending one way messages to subscribers, the events channel occasionally sends two way messages. If the two way message can't be delivered, then the channel assumes the subscription has died and automatically removes it.

### GLOSSARY OF TERMS

As described herein, a "Domain Name" refers to the name of a particular vertical industry domain (e.g. telecommunications, finance, health care). This term is defined in the Object Management Group Technical Committee Document on telecoms regarding Notification Service, published in June 15, 1998, herein incorporated by reference as the OMG Notification Service Specification. The OMG Notification Service Specification is used to describe a field in Common Object Services (COS) Structured events.

An "Event Broker" refers to any system or server that handles requests for subscriptions, an example of which is the TUXEDO Event Broker from BEA Systems, Inc. The Event Broker typically runs on an Event Server.

An "Event Repository" comprises a repository of metadata pertaining to COS events. This concept is further described in the OMG Notification Service Specification.

An "Event Service", "Event Notification Service", or "Notification Service" is any process running on or in communication with an Event Server that handles the notification of events. Event Servers that may be used with the invention include the WebLogic Enterprise Server from BEA Systems, Inc.

A "Structured Event" is a COS Structured Event as defined by the OMG Notification Service Specification. Structured Events contain a Fix header, Variable header, Filterable body parts and a Remaining body.

The programming model for one embodiment of the Event Service as described herein is based on the CORBA programming model. There are two sets of interfaces. One set of interfaces is a minimal subset of the CORBA Notification Service. The other is a proprietary interface designed to be easy to use. Both interfaces support standard structured events as defined by the CORBA Notification Service.

The Event Service described here is not merely an instance of either the standard CORBA Event Service, or the standard CORBA Notification Service, but in some embodiment may be compatible with both. The following is a list of limitations observed by an embodiment the Event Server:
- The maximum size for an event name is 32 bytes.
- The maximum size of a filter constraint is 256 bytes.
- Event priority is restricted to the range 1-100.

The Event Broker provides a complete and useful set of capabilities that support the development of applications that require events notifications via an Event Service.

Applications that will use this Event Service do not require the performance generally offered by a real-time messaging service. The Event Service described here is designed to provide reliable, durable events. These design goals are often in conflict with performance. To counter this the useful parts of the original CORBA specifications are used as appropriate, and novel, proprietary extensions are added, particularly when they facilitate ease-of-use.

Real-time event systems are designed to process high volumes of events with minimal system overhead or delay. The delivery guarantees tend to be weak. As such this specification is not for a real-time event system as typically defined, but instead for a hybrid approach that optimizes reliability of transmission and low system overhead.

Event systems that offer various delivery guarantees require input and output of events data (I/O) to secondary storage, typically a disk drive or an equivalent form of permanent memory system. This has a significant impact on performance and throughput. The invention conversely is directed to an event system offering delivery guarantees, but with minimal performance impact.

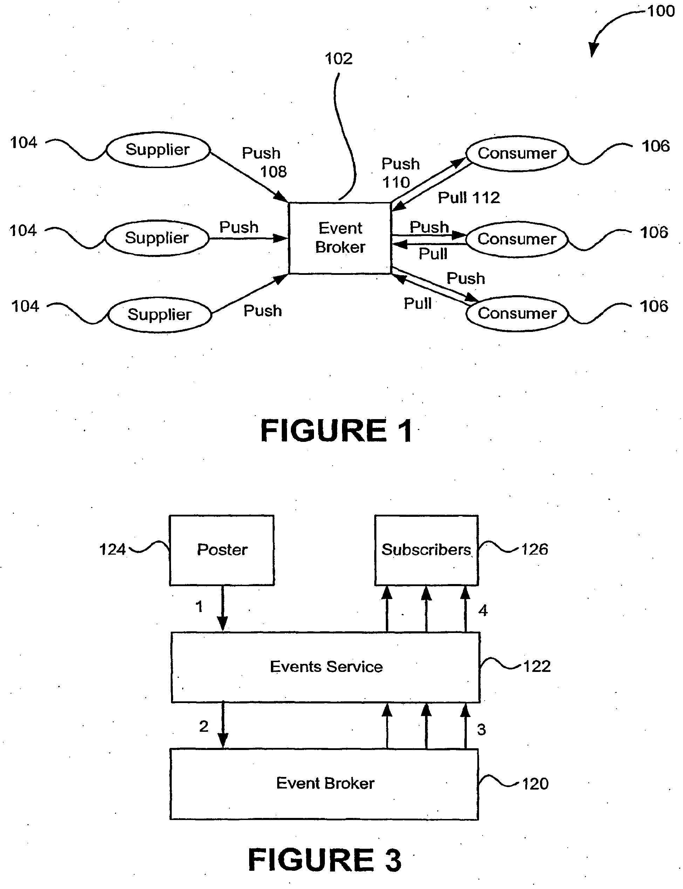

**Figure 1** shows a schematic of an event push/pull mechanism in accordance with the invention. There are three basic components in the system 100:
- The Supplier,
- The Consumer, and
- The Event Broker, also known as the event channel.

The Supplier 104 is the producer of events. It creates events, and posts them to the Event Broker 102. The Consumer 106 is the recipient of the events. It connects to the Event Broker, and subscribes to a set of events. When the Event Broker 102 receives an event that matches a Consumers subscription it delivers or makes available to the Consumer 106 that particular event. In most instances the Event Broker is a server or process running on an events server. An example of an events server that can be used with the invention is the Weblogic produced from BEA Systems, Inc.

There may be many Suppliers 104 and Consumers 106. Logically there is often only one Event Broker, although strictly speaking this is not true since Event Brokers can be replicated. Nonetheless, from either a Consumer or a Supplier point of view there appears to be only one.

Consumers 106 must select one of two event delivery paradigms, push 110 or pull 112. In one embodiment of the invention only the push model is supported. The Event Broker pushes events to the Consumer by calling a method in the Consumer. The Consumer pulls events from the Event Broker by calling a method in the Event Broker. Depending on the quality of service selected, the event might be stored durably pending delivery to the Consumer.

Suppliers use a push paradigm 108. They call a method (named push) in the Event Broker. The Event Broker takes responsibility for filtering and delivering the event. Consumers may specify a Quality Of Service (QOS) which effects the persistence of the Consumers subscription and, in the case of push Consumers, whether or not events delivery is retried following a failed delivery. There is no direct association between Suppliers and Consumers. At any point in time there may be zero, one or many Suppliers and/or Consumers. The Event Service provides a variety of interfaces (described in detail below) to allow a subscriber or poster to interact with the Event Server and to post or receive events.

In a Tuxedo type system, the Events Service is layered on top of TUXEDO Event Broker. In this implementation the M3 Events Service uses the following functions:
- When an event is posted, it is converted to an Event Broker event and tppost() is called to post it.
- When an event subscriber subscribes, the subscription is converted to an Event Broker subscription and tpsubscribe() is used to subscribe, having Event Broker deliver the event back to the Events Service.
- When Event Broker delivers an event to the Events Service, the event is converted to an Event Server event, and delivered to the subscriber.
- When a subscriber unsubscribes, the corresponding Event Broker subscription is removed via a call to tpunsubscribe():

### PERSISTENT AND TRANSIENT SUBSCRIPTION SELECTION

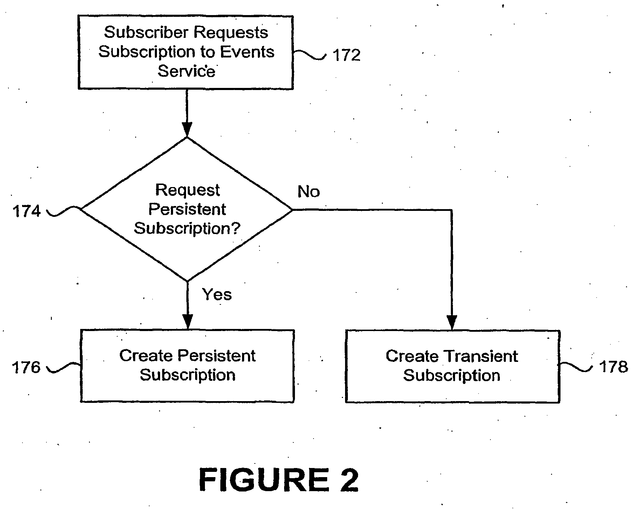

**Figure 2** shows a flowchart of a process by which a subscriber chooses between a transient and a persistent subscription. As shown in Figure 2, the subscriber, typically an application or server process, requests in step 172 a subscription to an Event Server (such as a Weblogic or Tuxedo server) via the Event Service. The request will denote (step 174) which type of subscription is required. If the subscriber wants a persistent subscription to the Event Server then a persistent subscription is created (step 176). Conversely, if the subscriber wants a transient subscription to the Event Server then a transient subscription is created (step 178). The distinction between these two types of subscription, and how the invention handles them differently, is discussed in detail below.

**Persistent Subscriptions** provide strong guarantees about event delivery, and the permanence (i.e. the degree to which the system maintains the subscription in its subscription database) of the subscription. These characteristics come with a cost. Since Persistent Subscriptions must typically be stored a permanent or durable storage, the use of Persistent Subscriptions consumes more system resources (disk space, CPU cycles, etc.), and requires more administration (managing queues, detecting dead subscribers, etc.). Subscriptions with a persistent QOS exhibit the following properties:
- The subscription is in effect until an unsubscribe operation is performed.
- Event delivery is retried until either the event is delivered or an administrative retry limit is exceeded. When the event retry limit has been exceeded the event is moved to an error queue. An administrator can move events from the error queue back to active queue where delivery attempts will restart.

**Transient Subscriptions** provide the best performance with the least overhead. Events are delivered on a best effort basis where best effort is defined to be a single delivery attempt. On detection that the Consumer is unavailable the subscription is terminated. Subscriptions with a transient QOS exhibit the following properties:
- The subscription is in effect until a failed event delivery is detected. On detection of a failed delivery the subscription is terminated. Note, this is not necessarily on the first failed delivery. Periodically the system will take measures to check to see if a delivery is successful. It is only during these periodic checks that delivery • failure detection occurs.
- Event delivery is attempted exactly once. If the attempt fails, the event is lost.

### EVENT TYPES

All events pushed by Suppliers, or delivered to Consumers are COS Structured Events, that is, they conform to the definition of Structured Events as specified by the COS Event Service (detailed further in the OMG Notification Service Specification). If the events are to be filtered based on content (versus filtering on domain and type), then additional restrictions apply. The restrictions apply to data types and filtering based on event content, and are explained below:
- The Fixed Header section consists of three fields: domain_type, event_type and an event_name.
- The Variable Header consists of a single name/value (NV) pair, namely Priority. Priority is used internally to the system to prioritize the processing of events. There is no guarantee that higher priority events will in fact be given priority over lower priority events.
- The Filterable Body consists of zero or more NV pairs.
- The Remaining Body consists of a single ANY.

To allow subscribers to filter on content, or to allow applications to subscribe to Event Server events and view these fields, the administrator creates Field Manipulation Language (FML) field table files to define these fields. These field tables form a repository, not to be confused with the events repository discussed in the OMG Notification Service Specification. A structured event's filterable_data section contains a list of name/value pairs. An event's data is typically stored in this list. The field names in the FML field table files must match the name in the structured event. The field type can be any allowable FML type (long, short, double, float, char, string, carray). The value in the structure event must be the same type as defined in the field table.

System events are generated by the system. They are not generated by applications. These events are mapped in COS Structured Events. User events can be posted by applications and received by Event Server applications. The table below shows how the structured event is fabricated.

### EVENT SERVICE

An Event Service allows one application to post an event (poster) and many other applications to receive the event (subscribers). The Event Service acts as an intermediary, receiving the posted event and forwarding it to interested subscribers. It allows for decoupled communication between posters and subscribers.

**Figure 3** shows the traditional interaction between the poster, subscriber events service, and events broker. As shown in Figure 3, a poster 124 posts (11, 12) events to an Event Server via an Event Broker 120 and an events service 122. Subscribers 126, conversely subscribe to the Event Server to receive (13, 14) notification of events. Each Event Server event subscription is converted into an Event Broker subscription. Similarly, each posted Event Server event is converted into an Event Broker posting. The Event Broker then decides which subscribers should receive the event (filters & fans out) and delivers them to the Events Service. The Events Service forwards them on to the subscribers. If a subscriber requests guaranteed delivery of events, then the Event Broker can include a queue. The process is used during a typical past/subscribe process is a s follow: (using a CORBA poster/subscriber as an example):
1. The poster invokes a CORBA method to post a COS Notification structured event to the Event Server.
2. The Events service reports this event as an Event Broker event.
3. The Event Broker decides which subscribers should receive the event, and then invokes a Tuxedo or an equivalent Event Service in the Events service (once per subscriber).
4. The Events service converts the Event Broker event back to a COS Notification structured event and then delivers it to the subscriber by invoking a CORBA method on a callback object provided by the subscriber.

The Event Server delivers events to a subscriber by invoking a CORBA method on a CORBA callback object implemented by the subscriber. Therefore, in this example the subscribers are likely to be other CORBA servers.

The invention provides two qualities of service for event delivery: transient and persistent. In accordance with the invention the Event Service tries to deliver an event to a transient subscriber exactly once. If the delivery fails, the event is dropped. The Event Service keeps trying to deliver an event to a persistent subscriber until the event is successfully delivered. It uses /Q queues to help with this.

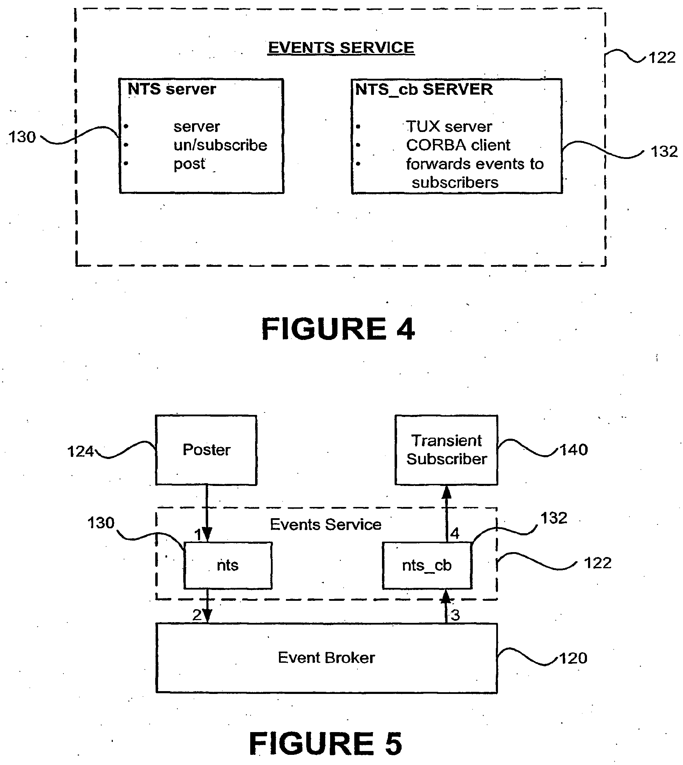

As illustrated in **Figure 4****,** the Event Service 122 can be split across two servers. The first server instance "nts" 130, implements all the CORBA event interfaces. The second server instance, named "nts_cb" 132, implements services that forward events to callback subscribers. It acts as a CORBA server in addition to being a CORBA client. Using two servers instead of a single server in this manner improves overall performance.

### TRANSIENT SUBSCRIPTIONS

**Figure 5** shows a transient subscription process in accordance with the invention. As before the poster 124 posts events to the Event Server via an Event Service 122 and Event Broker 120. For transient subscriptions, the Event Broker delivers these events directly to a callback service in the "nts_cb" server. This service then forwards the event to the subscriber. Some points to note about the Event Broker as it pertains to transient subscription include:
1. The application posts (21) a structured event to the Event Server Event Service (either in a transaction or hot) via the "nts" server 130.
2. The Event Server Event Service converts the structured event to an event buffer and uses "tppost" to post (22) the event in the Event Broker typically within the application transation. A timestamp field is added to the buffer (to aid with administration).
3. The Event Broker filters the event and fans it out the subscribers. Events for transient subscribers are delivered to the events service in the "nts_cb" server 132 via a one way message (23). A flag is set when subscribing that tells Event Broker to attach a field to the event buffer. That contains the subscriber's subscription id. Regardless of whether or not the application posted in a transaction, the events are delivered outside of the transaction.
4. The "nts_cb" server 132 converts the event bufferto a structured event. It also retrieves the subscriber's subscription id from the buffer. It looks up the callback object reference for that subscriber (given the subscription id). The event is then delivered (24) to the subscriber, for example by invoking a CORBA message on the callback object.

Transient subscriptions have two requirements. The first is that they be as fast as possible. The second is that dead subscriptions are detected and automatically removed. Events are delivered more quickly if one way messages are used. However, since one way messages don't return errors.

If two way messages are used, then errors can be detected and thus dead subscriptions can be found and removed. However, two way messages don't perform as efficiently. Rather than choosing simply between good performance and good cleanup, the invention uses a hybrid approach. In accordance with the invention, one way messages are usually used (for better performance), but occasionally a two way message is used (for error or failure detection). The administrator (for example via a number of command line options to the "nts_cb" server) can specify administrative limits on the subscription, such as the maximum number of consecutive one way messages that may be delivered between two way messages, the maximum time between successive two way messages, or the maximum time to wait for a response to a two way message. Typically, the first event for a subscriber is delivered with a two way message. Thereafter, events are delivered using one way messages until one of the administrative limits has been reached (for example, the maximum number of consecutive one way messages). At that point a new two way message is sent to check the validity of the subscription. Depending on the success of that two way message the system may then reset any timers associated with that subscription. One way messages are again sent, and when (any or all of) the limits have again been reached, another two way message is used and the cycle repeats. If a two way message is sent and fails, then the system assumes that subscription has died, and it is removed.

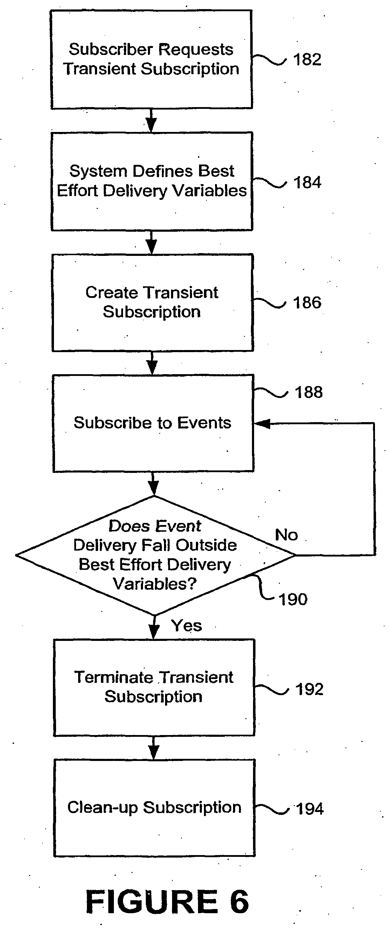

**Figure 6** shows a flowchart of a process by which a system incorporating the invention checks for a valid transient subscription, and terminates those subscriptions that it finds no longer valid. In step 182, the process begins with a subscriber requesting a transient subscription. The system interprets a set of best effort delivery variables, similar to Quality of Service variables, which are used to define standards for event delivery. A system administrator can specify or tune these best effort delivery variables to be optimized to ensure a standard of delivery appropriate to the subscribers needs or QOS requirements. For example, considering the requirements of a real-time stock-price or stock-quote application, the events (changes in stock prices) should be transmitted as rapidly as possible. Other applications such as weather update systems may not need such a high standard of event delivery. The administrator can specify a set of best-effort delivery variables for each type of application or subscriber handled by the Event Server. In step 184, these best-effort delivery variables are read or retrieved, and used to create (step 186) a transient subscription for this subscriber. In step 188, the subscriber proceeds to subscribe, and receive, posted events. A periodic check is made in step 190 to ensure that the event delivery to this subscribed falls within the best effort delivery variables and administrative limits specified by the system when the subscription is created. If the event delivery is within the settings, then the subscription is maintained. If however the event delivery falls outside the best effort delivery variables or administrative limits, then the subscription is terminated (step 192), and cleaned-up (step 194) to conserve resources such as sockets and memory.

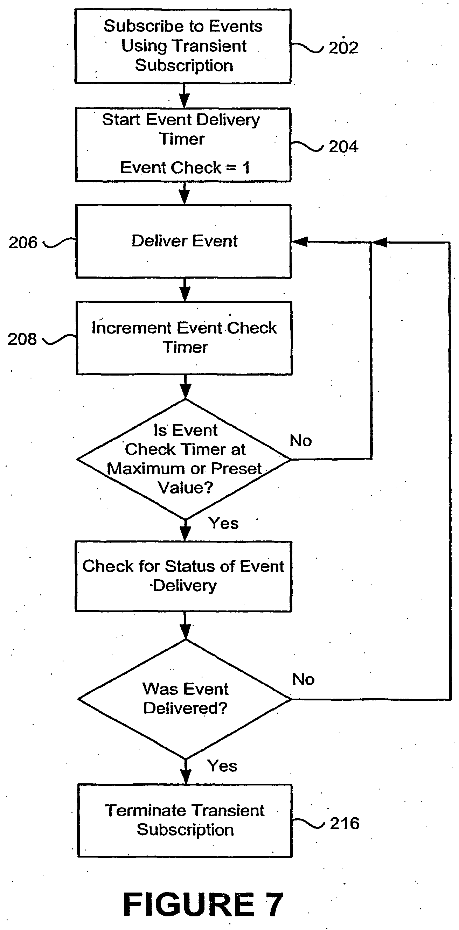

**Figure 7** shows a flowchart illustrating a more detailed view of one implmentation of the best effort delivery process used by the invention, in which the Event Server uses an event delivery timer to track the status of the delivery on a periodic basis, and to take action when delivery falls outside of the best-effort delivery variables or administrative limits. In step 202, the subscriber subscribes to events via a transient subscription. In step 204 the event delivery timer is initialized, with an initial value for event check = 1. The subscription is then maintained as each event is delivered (step 206) using a single message process. In step 208, as each event delivered, the event check timer is incremented. A system administrator can preset a maximum value for the event check timer that is appropriate for the QOS and optimization reasons. When the event check timer reaches this maximum value (step 210) it checks for the status of the transient subscription by sending a two-way event delivery (step 212). If the two-way message fails (step 214), then the system assumes the subscription is no longer valid, and it is terminated (step 216) and cleaned-up, as described above.

### PERSISTENT SUBSCRIPTIONS

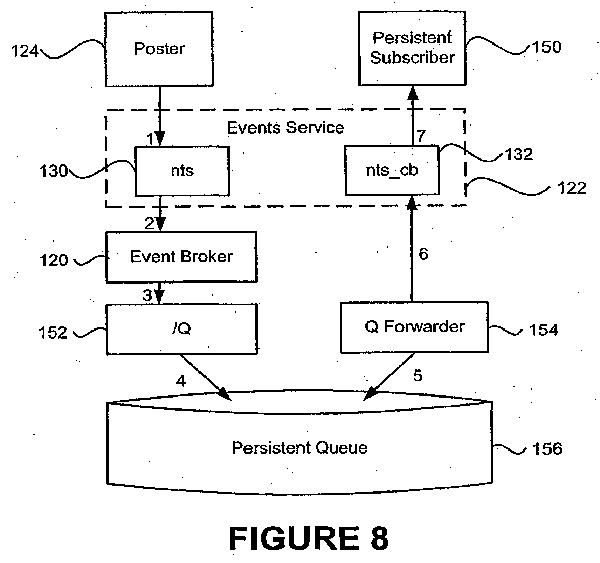

**Figure 8** shows a persistent subscription process in accordance with the invention. As with the invention. As with the transient subscription the poster 124 posts events to the Event Server via an Event Service 122 and Event Broker 120. For persistent subscriptions however, the Event Broker 120 delivers (33) the event to a /Q queue 152 for storage (34) in a persistent queue 156. The Q forwarder 154 periodically polls (35) this queue. When it finds an event, it invokes a service (36) in the "nts_cb" server. This service then forwards (37) the event to the persistent subscriber 150. If the event isn't successfully delivered, the Q forwarder 154 puts the event back on the queue. This ensures that delivery will be retried until the event is successfully delivered. Some points to note about the Event Broker as it pertains to persistent subscriptions include:
1. The application posts a structured event to the Event Server event
   service (either in a transaction or not).
2. The Event Server Event Service converts the structured event to an event buffer and uses "tppost" to post the event. It posts in the application's transaction (or none). A timestamp field is added to the buffer (to aid in administration).
3. The Event Broker filters the event and fans it out the subscribers. Events for persistent subscribers are enqueued via "tpenqueue" (an Event Broker implementation detail). The event in enqueued once per subscriber (vs. once per event). A flag is set when subscribing that tells Event Broker to attach to the event buffer, a field that contains the subscriber's subscription id. If the application posted in a transaction, the event is enqueued in that transaction. If the enqueue fails, then the transaction is rolled back. If the application doesn't post in a transaction, a new transaction is started for each enqueue (one per subscriber). If an enqueue fails, an error is logged. However, the poster is not informed of the error.
4. The /Q manager writes the event to the queue.
5. The Q forwarder wakes up (the administrator controls how often) and polls the queue to see if there are events to deliver.
6. The Q forwarder begins a transaction (one per event per subscriber) and invokes a service in the "nts_cb" server to deliver the event. If the service doesn't return successfully, then the transaction is aborted and the event is requeued for later delivery (within administrative retry limits).
7. The "nts_cb" server converts the event buffer to a structured event. It also retrieves the subscriber's subscription id from the buffer. It looks up the callback object reference for that subscriber (given the subscription id) and invokes a two way message on that object to deliver the event. If the message fails, then the service fails (in which case the transaction may be rolled back and the event retried later). When using IIOP and CORBA messaging the transaction is suspended while the message is delivered, since outbound IIOP doesn't support transaction propagation outside the cloud.

### PERSISTENT STORAGE

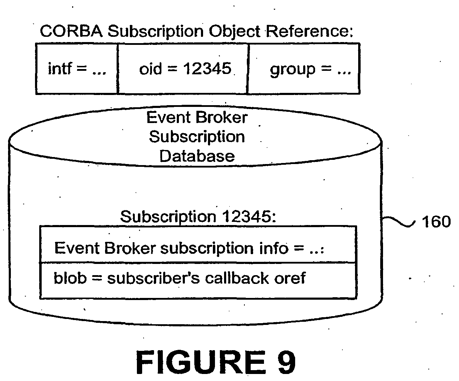

**Figure 9** shows an embodiment of a persistent storage for use with the invention. The Event Service creates an Event Broker subscription for each Events subscriber (COS Notification or Simple Events). It also records its subscription state in the Event Broker database, Subscribers are returned their corresponding Event Broker subscription identifier or id when they subscribe. They hand this id back to the Event Service when they wish to operate on their subscription. This ties the subscriber to their Event Broker subscription.

COS Notification subscribers are also returned a subscription object reference. The corresponding Event Broker subscription id is imbedded in the subscription object reference's object id. When the subscriber invokes a method on the subscription object, the Event Server retrieves the Event Broker subscription id from the object id. Again, this ties the subscriber to the corresponding Event Broker subscription.

Based on command line options, the callback nts_cb server creates a subscription cache with the following parameters:
- Maximum (max) number of subscription entries in the cache.
- Max number of one-way calls to deliver events to transient subscribers.
- Max time in seconds between two-way calls to deliver events to transient subscribers.

In accordance with one embodiment of the invention, each cache entry holds the subscription id, and a corresponding callback object reference. If this is a transient subscription, the following two additional fields are maintained: a) a timestamp of the last two-way call attempted to deliver an event for this subscription; and b) the count of the one-way calls attempted since the last two-way call. Since the nts_cb server sets up a fixed size cache, an entry for a particular subscription id if added, will be inserted in a corresponding slot. If an entry previously exists in the slot that a new subscription cache entry is being inserted, the previous entry is bumped off.

The Event Broker allows subscribers to attach a generic "blob" (string) to a subscription. The blob is stored persistently in the Event Broker database and can be looked up via a Management Information Base (MIB) given a subscription id. The Event Server Event uses this feature to store its subscription information. For example, callback object references for subscriptions are stored in the blob.

### SCALING AND PERFORMANCE

The Event Service provided by the invention does not have a single point of failure, and is designed for maximum parallelism. In this regard, the following features may be implemented.
- The "nts" and "nts_cb" servers are designed to be as stateless as possible. Any "nts" server may create new subscriptions, post events and unsubscribe any existing subscription. Similarly, any "nts_cb" server may delivery any event to any subscriber. Because these servers are "stateless", the administrator may replicate them.
- Administrators may also replicate Event Broker and /Q servers (Since Event Brokers share a database, subscriptions are not lost if an Event Broker server dies. Similarly, since /Q servers share a database, persistent events are not list if a /Q server dies).
- Most Event Server CORBA object implementations use system objects to improve performance.
- Administrators may use more than one Q space.
- Events are delivered to transient subscribers via a combination of "one way" and "two way" messages to improve or optimize performance and error detection.

### ADMINISTRATION

In a Tuxedo implementation, the administrator must start the following servers (only servers in addition to those needed to run Event Server are listed here):
- TMUSREVT (the user Event Broker server).
- "nts" server (handles posting and un/subscribing).
- "nts_cb" server (handles delivering events to subscribers).

The "nts_cb" server keeps a fixed size cache in memory mapping subscription ids to callback object references. This is used to increase performance. The administrator can control the size of this cache via the "-s size" command line option to the "nts_cb" server. It specifies how many of these mappings may be retained in memory. The default value is 1000. Normally, each "nts_cb" server has its own work queue of events to deliver (note: this queue contains a list of service calls to perform - it is not a /Q queue containing events to deliver). This can be a problem, in that, if an "nts_cb" server is delivering an event to a subscriber, and the subscriber's callback method takes a long time to process the event, all the other events in that "nts_cb" server's work queue are stuck waiting. The administrator may avoid this by configuring an MSSQ set for the "nts_cb" servers (see the tuxedo documentation for instructions). This allows them to share a single work queue. As soon as any "nts_cb" server frees up, the next event on the work queue is delivered.

For **Transient Subscribers,** the administrator may set command line parameters to the "nts_cb" server which control the frequency of two way versus one way messages used to deliver events to transient subscribers. The parameters are:
- -c count: specifies the maximum number of consecutive one way messages that will be sent to a transient subscriber. The default value is 10 messages. If this limit is exceeded, the next event will be delivered via a two way message.
- -t time: specifies the maximum time that consecutive one way messages will be sent to a transient subscriber. The default value is 300 seconds (5 minutes). If this limit is exceeded, the next event will be delivered via a two way message.

For **Persistent Subscribers,** the administrator must configure a queue for the events. This entails using "qmadmin" to:
- Create a disk device for the qspace.
- Create a qspace using that device.
- Create two queues within that qspace. The first, called "NTS_PERS", is where the events are delivered. The administrator can control how the time between retries as well as the number of retries when creating the queue. The second queue, called "NTS_ERRORS", is the error queue. Events that cannot be delivered within retry limits are deposited here.

The administrator must start the TMQUEUE and TMQFORWARD servers. Specify the "-s MY_QSPACE_NAME:TMQUEUE" option when starting TMQUEUE. Specify the "-q NTS_PERS" option when starting TMQFORWARD. The administrator must configure a null transactional group and run TMUSREVT, TMSYSEVT, nts and nts_cb in that group. The administrator must configure a /Q transactional group. This group must use the device and qspace created by "qmadmin". TMQFORWARD and TMQUEUE must run in this group. The administrator must also configure a transaction log.

Administrators may configure more than one qspace (and the corresponding group and servers) to avoid having a single point of failure. Each "nts" server is assigned a "birth" qspace. Whenever that server creates a new subscription, the new subscription is assigned to this qspace. This helps to spread out the subscriptions over the available qspaces. All of that subscription's events will be delivered via that qspace, though any "nts_cb" server can deliver the event to that subscriber.

The administrator can control an "nts" server's birth qspace via the "-s space" option. "space" is the name of the qspace. The default value is "NTS_QSPACE".

### DATA FILTERING AND EVENT BROKER INTEROPERABILITY

A structured event's "filterable_data" field contains a list of name/value pairs. An event's data is typically stored in this list. A structured event's Variable Event Header field also contains a list of name/value pairs. Typically, the Variable Event Header is used to specify per event delivery criteria (eg. Priority). To either allow subscribers to filter on these fields (Filterable Data or Variable Event Header), or to allow Tuxedo applications to subscribe to Event Server events and view these fields, the administrator must create FML32 field table files to define these fields, and configure the "nts" and "nts_cb" servers to access these files.

The field names in the FML32 field table files must match the name in the structured event. The field type can be any allowable FML32 type (long, short, double, float, char, string, carray). The value in the structure event must be the same type as defined in the field table. The administrator must use the FLDTBLDIR32 and FIELDTBLS32 environment variables to make these field table files available to the "nts" and "nts_cb" servers.

### CLEANUP MECHANISMS

Applications using the Events Service have some responsibilities. For example, subscribers must eventually unsubscribe. However, not all applications are well behaved. The Events Service provides manual and automatic cleanup mechanisms to help recover from application errors so that an errant application doesn't affect the performance of the entire Events Service.

### Automatic Cleanup Mechanisms

If the Event Server receives an exception that an object no longer exists, for example a CORBA::OBJ_NOT_EXIST exception when delivering an event to a subscription, then it automatically drops the subscription. However, in the typical instance an ORB cannot raise this exception, therefore this cleanup mechanism isn't very reliable. Occasionally, the "nts_cb" server uses a "two way" invoke to deliver an event to a transient subscriber. If an exception is returned, then the subscription is automatically dropped. This is the most reliable automatic cleanup mechanism provided by the invention. The decision to use a "two way" invokes at a certain time may be made by maintaining an event_check timer that is incremented after each "one way" invoke. When the timer reaches a certain pre-set or maximum number, the "two-way" invoke is issued to verify the event delivery. Subscribers should ideally use transient best effort callback subscriptions whenever possible.

### Manual Cleanup Mechanisms

All events for guaranteed delivery subscribers are sent to /Q queues. These events are time stamped and tagged with the subscription id of the subscriber. These queues have retry parameters. When an event has exceeded the retry limits, it is moved to an error queue. Subscribers are allowed to attach an administrative name to their subscription. The Event Server provides an administration tool which allows administrators to peruse the event queues, based on subscription id, subscription name and/or event age. The administrator can purge old events or move events from the error queue back to the delivery queue to try sending them again. The administration tool also lets the administrator browse and remove subscriptions based on subscription id and/or subscription name, and uses the Event Broker and /Q MIBS to find subscriptions and queued events. It also uses the subscription's "blob" to find its administrative name and subscription type.

### RUNTIME SUBSCRIPTION SCENARIOS

If a subscriber goes away without unsubscribing, and events still occur which match the dead subscription then the invention handles the subscription in a variety of different ways.
- Persistent subscriber: the events eventually end up in the error queue. Use Event Server eadmin to detect and cleanup.
- Transient subscriber: eventually "nts_cb" will get an error when delivering an event and automatically drop the subscription.

If a subscriber goes away without unsubscribing, and no more events occur which match the dead subscription, then thee is no indication other than degraded performance (all events are compared against all subscriptions to see if they should be delivered) that this has occurred. The Event Server administration tool can be used to browse and cleanup these subscriptions.

COS Notification requires multiple invocations on multiple objects to create a subscription. As a result, process-bound objects must be used. If a subscriber goes away without completing the subscription, then these objects collect in the "nts" server's memory. No mechanism is provided to detect and cleanup this problem. The administrator's only recourse is to notice that the process size has grown, then shut down and restart the offending "nts" server.

If events can't be delivered to a persistent subscriber because the network is down, then the events will accumulate in the error queue. The administration tool can be used to find these events and purge them or move them back the callback queue.

### Transactions

Sending and receiving events use one set of transactional semantics while subscribing and unsubscribing use another. Posters may choose to use a transaction or not. Subscribers are NOT called within a transaction. The various transaction scenarios handled by the invention are outlined below:

### Post within a transaction, transaction committed

The event is guaranteed to be delivered to persistent subscribers and might be delivered to transient subscribers.

Persistent Subscriber: The event is either delivered to the subscriber or put on the error Q. It may be delivered more than once. It is delivered outside the context of a transaction. If the callback method raises an exception, then the event will be delivered again (up to the retry limit the administrator set for the queue). If the callback method successfully returns, normally the event is considered delivered. However, it is possible, since the event is delivered outside a transaction, that Event Server (M3) Events receives an error and redelivers the event.

Transient Subscriber: The event may be delivered to the subscriber (at most once).

### Post within a transaction, transaction rolled back:

The event is guaranteed to NOT be delivered to persistent subscribers and PROBABLY WILL be delivered to transient subscribers.

Persistent Subscribers: Since Event Broker delivers the events to a queue within the scope of the poster's transaction, the events never get on the queue if the transaction is rolled back. Therefore, they are never delivered to the subscriber.

Transient Subscribers Event Server Events makes transient delivery as lightweight as possible. It does this by delivering the events to a tuxedo service outside the scope of the poster's transaction. This allows the Event Broker to use a "one way" message to deliver the event to this service (very lightweight). Similarly, this service uses a "one way" invoke to deliver the event to the subscriber. Since the Event Broker delivers the event immediately (instead of waiting to find out if the transaction is rolled back), and since the Event Server doesn't want the overhead of storing the events until the transaction is rolled back or committed, events are delivered to the subscribers immediately. Therefore, transient subscribers may receive "phantom events" - events that are posted within a transaction which is subsequently rolled back. If this behavior isn't acceptable, then the subscriber should choose persistent delivery (or the poster must be changed to not post within a transaction).

### Post outside a transaction

Event Server Events posts the event to Event Broker outside the scope of a transaction. Event Broker delivers the event to a queue for each persistent subscriber. This delivery uses autotran (a separate transaction for each subscriber). It also uses non-transactional "one way" messages to deliver the events to transient subscribers.

### Post Succeeds

The event has been fanned out to each subscriber that should receive it. The event may or may not have been delivered yet. That is, the event has been sent on its way, but might not have gotten there yet. Delivery to a subscriber may fail.

### Post Fails

This means that no subscribers have received the event.

### Subscribing / UnSubscribing

The event Broker's subscription database is not transactional, and therefore subscribing and unsubscribing are not transactional. Applications are expected to un/subscribe outside the context of a transaction. If an application tries to un/subscribe within a transaction, the transaction is ignored and the change is permanently made.

### EVENT SERVICE INTERFACES

The Event Service supports a variety of interfaces including the two described herein. One is based on the CORBA Notification Service (as described in the OMG Notification Service Specification). The other is an alternative proprietary interface designed to be easier to use. Both interfaces pass structured events as defined by the OMG Notification Service Specification.

### 1. Simple Events Interface

One embodiment of the events interface, the Simple Events Interface (SEI) is designed to be the primary interface for Event Server events. Simplicity and ease-of-use are the defining characteristic of this interface.

The SEI interface is based on a push model. Suppliers push events to the system, and the system pushes events to the subscribers. In this embodiment there is no provision for pulling events. For Suppliers the inherent inefficiencies of pulling events make it an unattractive option. For Consumers there are three contradictory issues:
1. Dead pull Consumers clog the system with unwanted events. There is no way to determine when a Consumer is dead rather than just lazy or busy. This situation creates an administrative headache.
2. There is no way to do a blocking pull. Forcing Consumers to poll is burdensome and inefficient.
3. Events waiting to be pulled need to sit somewhere, and that pretty much means they need to be queued. Since queues are difficult to configure and manage, this introduced excessive complexity given that the application had no other requirements that mandated the use of queues.

The SEI application program interface (API) is provided by the following interfaces:
- Tobj_SimpleEvents::Channel,
- Tobj_SimpleEvents:ChannelFactory, and
- CosNotifyComm::StructuredPushConsumer interfaces.

### CHANNEL INTERFACE

The Channel interface is used by Consumers to subscribe, and unsubscribe to events, and by Suppliers to post events. It contains three operations: subscribe, unsubscribe, and push_structured_event.

### subscribe

The syntax of the subscribe operation is shown below:

```
            SubscriptionID subscribe (
            in Tobj_events::SubscriptionType sub_type,
            in string subscription_name,
            in RegularExpression domain,
            in RegularExpression type,
            in FilterExpression data_filter,
            in CosNotifyComm::StructuredPushConsumer push_Consumer
 );
```

The subscribe operation is used to enter a subscription for a push Consumer. The subtype name, subscription name, domain name, type name, filter expressions, and the object reference of the push Consumer object are passed in.

The sub_type parameter specifies the desired quality of service. It can take the value Tobj_Events::TRANSIENT_SUBSCRIPTION, or Tobj_Events::PERSISTENT_SUBSCRIPTION.

The subscription_name parameter specifies a name that is used by an administer to identify the subscription. Applications should use names that are meaningful to a system administrator since this will be the primary way that an administratorassociates a user with a subscription and the events that result from it. This parameter is optional (i.e., an empty string can be passed in). The domain and type fields are defined in the OMG Notification Service Specification.

The push_Consumer is the object that will be called when a structured event is delivered. In general, persistent object references should be used when the sub_type is set to Tobj_Events::PERSISTENT_SUBSCRIPTION, and transient object references should be used when the sub_type is set to Tobj_Events::TRANSIENT_SUBSCRIPTION.

The life of the subscription is a function of the QOS, and potentially other factors. On return, a unique subscription identifier is passed back. The effect of this operation is not instantaneous. There can be a brief delay between returning from this operation, and the actual start of event delivery.

### unsubscribe

The syntax of the unsubscribe operation is shown below:

```
      void unsubscribe(
            in SubscriptionID id
      );
```

The unsubscribe operation is called by the client to terminate a subscription. On return from this operation, no further events will be delivered. There is one input parameter, a SubscriptionID. This operation is not instantaneous. After returning from this operator a Consumer may continue to receive events for a brief period of time.

### push_structured_event

```
      void push_structured event(
      in CosNotification::StructuredEvent event
      (;
```

The push_structured_event operation is used to post an event. It has one input parameter, a structured event as defined by the COS Notification specification. This operation has transactional behavior when used in the context of a transaction. The OMG Notification Service Specification contains further details of the structured event.

### 2. Channel Factory Intertace

The ChannelFactory interface is used to find event channels. There is a single operation in this interface, find_channel. The syntax of the find_channel operation is shown below:

```
    Channel find_channel (
            in ChannelID channel_id
      );
```

The find_channel operation is used to find an event channel. There is currently only a single channel. The ChannelID that is passed in must be set to Tobj_Events::DEFAULT_CHANNEL.

### 3. CORBA Notification Service Interface

This section contains a discussion of the operation defined by the COS CORBA Notification service interface API specification that are supported by Event Server events. These operations are a subset of the complete set of operations. This subset is a functionally complete API that can be used as an alternative to the Simple Events API.

The CORBA Notification Service Interface (hereafter referred to as the COS Notification). API is necessarily more complex than the Simple Events API. There are two reasons for this. First, the COS Notification API is complex. Second, additional restrictions have been placed on the operations that are supported. This API is provided for those who require that a standard API be used whenever possible even though it might produce little or no benefit beyond the Simple Events API. Applications that are developed to use this API are mostly portable, although not all of the Notification Service API may be supported to facilitate this.

The model put forth by the OMG Notification Service Specification assumes that event channels or Event Brokers are constructed programmatically at runtime. This view is counter to the way many commercial users will use an event system. Consequently, none of the services for constructing the event channels are included. The following is a list of the CORBA Notification Service operations that are implemented in full or in part in the Event Server provided by the invention.

### add_constraints

The add_constraints operator differs from the standard CORBA definition in the following ways. It can only be called once, must be called before the filter is added to the proxy object, and must consist of only a single constraint which has a single event type.

### destroy

### create_filter

The filter grammar must be declared by setting the input argument constraint_grammar to Tobj_Notification::Constraint_grammar.

### set_qos

The set_qos operator is used to set the QOS. There are two components to the QOS, subscription type and the subscription name. The subscription type is set by constructing a name/value pair where the name is "Tobj_CosNotification_SUBSCRIPTION_TYPE" and the value is either PERSISTENT_SUBSCRIPTION, or TRANSIENT_SUBSCRIPTION. The subscription name is set by constructing a name/value pair where the name is "Tobj_CosNotification_SUBSCRIPTION_NAME", and the value is a user defined string.

### add_filter

The add_filter operator differs from the standard CORBA definition in the following ways. This operation can not be called after the Consumer is connected it can be called at most once, and when it is called the filter constraint expression must already be present in the filter. Only filters created by the Event Server implementation of the CosNotifyFilter::FilterFactory create_filter method can be added.

### get_filter

The FilterID that is passed in must be a valid for this proxy object. If the filter id is not valid for any proxy object associated with the event channel, then a FilterNotFound exception is thrown. Filter object references that are returned from this operation can not be used in comparison operations. Filter object references returned by this operation can be used by the CosNotifyFilter::Filter::destroy operations but are of little use otherwise since they can not be modified or added to proxy objects.

### disconnect_structured_push Supplier

The disconnect_structured_push_Supptier operator does not stop event delivery instantaneously. After returning from this operator a Consumer may continue to receive events for a period of time.

### connect_structured_push_Consumer

The connect_structured_push_Consumer operator differs from the standard CORBA definition in the following way. If the Consumer requires event filtering, then the filter must already be added to the proxy object prior to this operation being called. Otherwise, all structured events (i.e. unfiltered events) will be delivered. The effect of this operation is not instantaneous. There can be a delay between returning from this event, and the actual start of event delivery.

### push_structured_event

The push_structured_event operator differs from the standard CORBA definition in the following ways:
1. The Priority specified in the variable header section of the event must be in the range 1-100 (vs. -32,767 - 32,767 which is the specified range).
2. Only fields in the Filterable Data portion of the event can be used in filter constraints.
3. If event content (versus filtering on domain and type only) is required, then additional restrictions apply:

### disconnect_structured_push_Consumer

### connect_structured_push_Supplier

### MyType

The MyType attribute returns "PUSH_STRUCTURED".

### get_proxy_Supplier

The get_proxy_Supplier operator returns a proxy Supplier object created by this Consumer admin object. An input argument (ProxyID) uniquely identifies the proxy object. Callers should be aware that certain administrative operations can destroy the proxy object thus invalidating the ProxyID associated with it. If the ProxyID is invalid a ProxyNotFound exception is thrown.

### obtain_notification_push_Supplier

The obtain_notification_push_Supplier is used to create proxy push Supplier objects. Since only structured events are supported the ClientType input argument must be set to "STRUCTURED_EVENT". The ProxyID returned should be durably stored so that following a failure it can be used to re-obtain the proxy object.

### obtain_notification_push_Consumer

The obtain_notification_push_Consumer is used to create proxy push Consumer objects. Since only structured events are supported the ClientType input argument must be set to "STRUCTURED_EVENT". The ProxyID returned should be durably stored so that following a failure it can be used to re-obtain the proxy object.

### default_Supplier_admin

The default_Supplier_admin attribute returns the default Supplier admin object for the event channel.

### default_filter_factory

The default_filter_factory attribute returns the default filter factory object for the event channel.

### default_Consumer_admin

The default_Consumer_admin attribute returns the default Consumer admin object for the event channel.

### get_event_channel

The get_event_channel returns the EventChannel object. The ChannelID that is passed in must be set to Tobj_Events: :DEFAULT_CHANNEL.

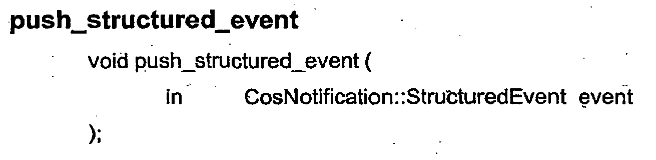

The push_structured_event operation is provided by the Consumer. It is called by the system each time a structured event is delivered. The operation contains a single input parameter which is a structured event. This interface contains two additional operations, disconnect_ structured_push_Consumer and offer_change. These operations may never be invoked. The subscriber should provide stubbed out versions of these routines.

### 4. Channel Factory

As part of the application bootstrapping process it is necessary to obtain an object reference to the channel factory (CosNotifyChannelAdmin: :EventChannelFactory). This is done by using the resolve_initial_references operation of the bootstrap object. Support for the following service Ids is added to the bootstrap object.

### TRANSACTIONS

The behavior with respect to transactions is the same for the CORBA and proprietary interfaces. The only operations which support transactional behavior are CosNotifyChannelAdmin: :StructuredProxyPushConsumer: :push_structured_event and Tobj_SimpleEvents::push_structured_events. All other operations can be used in the context of a transaction but work the same irrespective of whether they are executed in a transaction or not.

The behavior when posting an event is tied to the QOS of the Consumer. If an event is posted in the context of a transaction, and the event delivery QOS of the Consumer is persistent, delivery will be determined by the outcome of the transaction. That is, if the transaction is committed then delivery to Consumers is guaranteed. If the transaction is rolled back, then it will not be delivered.

If an event is posted in the context of a transaction, and the event delivery QOS of the Consumer is transient, then a best-effort attempt will be made to deliver the event irrespective of the transaction outcome. That is, if the transaction is committed a best-effort delivery will be attempted. If the transaction is rolled back then a best effort delivery may, or may not be attempted. This can result in phantom events being delivered to Consumers. There is no transaction context associated with event delivery.

With both the SEI interface, and the CORBA Notification Service interface there are two Qualities Of Service (QOS): Persistent, and Transient, which are used to select a persistent or transient subscription mechanism respectively, as described above.

## Claims

1. A method for maintaining an event-based subscription by a subscriber client application (106) to an events notification service, the method being implemented on an event server, the method comprising the steps of:
defining a set of delivery variables that define standards for event delivery and administrative limits, wherein the delivery variables and administrative limits are associated with a subscription to the events notification service;
receiving events from a posting client application (104) and communicating said events to said subscriber client application;
subscribing to events delivered by said events notification service via said subscription;
using a subscription cache to deliver the events, wherein the subscription cache includes a map of subscription identifiers to callback object references, and wherein said subscription cache is stored on a persistent storage device;
periodically checking the delivery of said events to said subscriber client application in accordance with said administrative limits; and,
if said periodic checking of delivery of events indicates a failure in delivery then cancelling the subscription;
wherein said events are delivered to subscriber client applications using one-way event notification messages, and wherein said step of periodically checking includes sending and verifying delivery of a two-way event notification to the subscriber client application.

2. The method of claim 1 wherein said delivery variables include a maximum time for delivery of an event to said subscriber client application.

3. The method of claim 1 wherein each entry in said subscription cache includes, for the subscription identified by said entry, a value indicating the maximum time between periodic checks for the delivery of events for that subscription.

4. The method of claim 3 wherein said entry for that subscription includes a value indicating the number of events to be delivered between delivery checks, together with a time stamp for any previous delivery checks.

5. The method of claim 1 further comprising:
referencing the subscription cache to determine whether the next event notification message to a subscription should be sent as a one-way message or as a two-way message.

6. The method of claim 1 wherein the entry corresponding to a subscription is removed when that subscription is cancelled.

7. The method of claim 1 wherein the delivery variables are specified by the subscriber client application by specifying a quality of service when requesting the subscription.

8. An event server for maintaining an event-based subscription by a subscriber client application (106) to an events notification service, the event server comprising:
a set of delivery variables that define standards for event delivery and administrative limits, wherein the delivery variables and administrative limits are associated with a subscription to the events notification service;
an events service (122) for receiving events from a posting client application (124) and communicating said events to said subscriber client application (106);
an events broker (120) in communication with said event service, for handling a request for a subscription from a subscriber for event notifications and matching the notification of said events to said subscribers via the events service;
the events service (122) being in communication with said events broker for delivering events to an object at said subscriber client application, and periodically verifying delivery of said event in accordance with administrative limits associated with said subscription; and,
a subscription cache used by the events service to deliver the events, wherein the subscription cache includes a map of subscription identifiers to callback object references, and wherein said subscription cache is stored on a persistent storage device;
an events check timer, for maintaining a number of event deliveries, and communicating said number of event deliveries to said events service for use in said periodically verifying delivery;
wherein said events are delivered to subscriber client applications using one-way event notification messages, and wherein said events service periodically verifies delivery of said event associated with said subscription by sending a two-way event notification to the subscriber client application.

9. The event server of claim 8 wherein said delivery variables include a maximum time for delivery of an event to said subscriber client application.

10. The event server of claim 8 wherein each entry in said subscription cache includes, for the subscription identified by said entry, a value indicating the maximum time between periodic checks for the delivery of events for that subscription.

11. The event server of claim 10 wherein said entry for that subscription includes a value indicating the number of events to be delivered between delivery checks, together with a time stamp for any previous delivery checks.

12. The event server of claim 8 wherein the events service references the subscription cache to determine whether the next event notification message to a subscription should be sent as a one-way message or as a two-way message.

13. The event server of claim 8 wherein the entry corresponding to a subscription is removed when that subscription is cancelled.

14. The event server of claim 8 wherein the delivery variables are specified by the subscriber client application by specifying a quality of service when requesting the subscription.

15. Computer-readable instructions for maintaining an event-based subscription by a subscriber client application to an events notification service, the computer-readable instructions being implemented on an event server, wherein the computer-readable instructions, when read and executed by the event server, cause said event server to perform the steps of:
defining a set of delivery variables that define standards for event delivery and administrative limits, wherein the delivery variables and administrative limits are associated with said subscription to the events notification service;
receiving events from a posting client application and communicating said events to said subscriber client application;
subscribing to events delivered by said events notification service via said subscription;
using a subscription cache to deliver the events, wherein the subscription cache includes a map of subscription identifiers to callback object references, and wherein said subscription cache is stored on a persistent storage device;
periodically checking the delivery of said events to said subscriber client application, in accordance with said administrative limits; and,
if said periodic checking of delivery of events indicates a failure in delivery then cancelling the subscription;
wherein said events are delivered to subscriber client applications using one-way event notification messages, and wherein said event service periodically verifies delivery of said event associated with said subscription by sending a two-way event notification to the subscriber client application.

## Patentansprüche

1. Verfahren zum Beibehalten eines ereignisbasierten Abonnements durch eine Abonnenten-Client-Anwendung (106) an einem Ereignisbenachrichtigungsdienst, wobei das Verfahren in einem Ereignis-Server implementiert ist, wobei das Verfahren die folgenden Schritte umfasst:
Definieren einer Gruppe von Liefervariablen, die Standards für eine Ereignislieferung und administrative Grenzen definieren, wobei die Liefervariablen und die administrativen Grenzen einem Abonnement des Ereignisbenachrichtigungsdienstes zugeordnet sind;
Empfangen von Ereignissen von einer Versendungs-Client-Anwendung (104) und Kommunizieren der Ereignisse an die Abonnenten-Client-Anwendung (106);
Abonnieren von Ereignissen, die durch den Ereignisbenachrichtigungsdienst über das Abonnement geliefert werden;
Verwenden eines Abonnement-Cache-Speichers, um die Ereignisse zu liefern, wobei der Abonnement-Cache-Speicher eine Karte von Abonnementkennungen auf Callback-Objektreferenzen enthält und wobei der Abonnement-Cache-Speicher auf einer dauerhaften Speichervorrichtung gespeichert ist;
periodisches Überprüfen der Lieferung der Ereignisse an die Abonnenten-Client-Anwendung (106) gemäß den administrativen Grenzen; und
dann, wenn das periodische Überprüfen der Lieferung von Ereignissen ein Scheitern der Lieferung angibt, Kündigen des Abonnements;
wobei die Ereignisse an Abonnenten-Client-Anwendungen unter Verwendung von einseitig gerichteten Ereignisbenachrichtigungsnachrichten geliefert werden und wobei der Schritt des periodischen Überprüfens enthält, eine beidseitig gerichtete Ereignisbenachrichtigung an die Abonnenten-Client-Anwendung (106) zu senden und deren Lieferung zu überprüfen.

2. Verfahren nach Anspruch 1, wobei die Liefervariablen eine maximale Zeit für die Lieferung eines Ereignisses an die Abonnenten-Client-Anwendung (106) enthalten.

3. Verfahren nach Anspruch 1, wobei jeder Eintrag in den Abonnement-Cache-Speicher für das durch den Eintrag identifizierte Abonnement einen Wert enthält, der die maximale Zeit zwischen periodischen Überprüfungen für die Lieferung von Ereignissen für dieses Abonnement angibt.

4. Verfahren nach Anspruch 3, wobei der Eintrag für das Abonnement einen Wert enthält, der die Anzahl von Ereignissen, die zwischen Lieferungsüberprüfungen zu liefern sind, zusammen mit einem Zeitstempel für vorherige Lieferungsüberprüfungen angibt.

5. Verfahren nach Anspruch 1, das ferner Folgendes umfasst:
Referenzieren des Abonnement-Cache-Speichers, um zu bestimmen, ob die nächste Ereignisbenachrichtigungsnachricht zu einem Abonnement als eine einseitig gerichtete Nachricht oder als eine beidseitig gerichtete Nachricht gesendet werden soll.

6. Verfahren nach Anspruch 1 wobei der Eintrag, der einem Abonnement entspricht, entfernt wird, wenn das Abonnement gekündigt wird.

7. Verfahren nach Anspruch 1, wobei die Liefervariablen durch die Abonnenten-Client-Anwendung durch Spezifizieren einer Dienstqualität spezifiziert werden, wenn das Abonnement angefordert wird.

8. Ereignis-Server zum Beibehalten eines ereignisbasierten Abonnements durch eine Abonnenten-Client-Anwendung (106) für einem Ereignisbenachrichtigungsdienst, der Ereignis-Server umfasst:
eine Gruppe von Liefervariablen, die Standards für eine Ereignislieferung und administrative Grenzen definieren, wobei die Liefervariablen und die administrativen Grenzen einem Abonnement eines Ereignisbenachrichtigungsdienstes zugeordnet sind;
einen Ereignis-Service (130) zum Empfangen von Ereignissen von einer Versendungs-Client-Anwendung (124) und Kommunizieren der Ereignisse an die Abonnenten-Client-Anwendung (106);
einen Ereignisvermittler (120) in Kommunikation mit dem Ereignis-Service zum Bearbeiten einer Anforderung eines Abonnements von einem Abonnenten für Ereignisbenachrichtigungen und Anpassen der Benachrichtigung der Ereignisse an die Abonnenten über einen Ereignis-Service;
den Ereignis-Service (122) in Kommunikation mit dem Ereignisvermittler zum Liefern von Ereignissen an ein Objekt an der Abonnenten-Client-Anwendung und periodischen Überprüfen der Lieferung des Ereignisses gemäß administrativer Grenzen, die dem Abonnement zugeordnet sind; und
einen Abonnement-Cache-Speicher, der durch den Ereignisdienst verwendet wird, um die Ereignisse zu liefern, wobei der Abonnement-Cache-Speicher eine Karte von Abonnementkennungen auf Callback-Objektreferenzen enthält und wobei der Abonnement-Cache-Speicher auf einer dauerhaften Speichervorrichtung gespeichert ist;
eine Ereignisüberprüfungszeituhr zum Beibehalten einer Anzahl von Ereignislieferungen und Kommunizieren der Anzahl von Ereignislieferungen an den Ereignisdienst für die Verwendung in der periodischen Überprüfung der Lieferung;
wobei die Ereignisse an Abonnenten-Client-Anwendungen unter Verwendung von einseitig gerichteten Ereignisbenachrichtigungsnachrichten gesendet werden und wobei der Ereignisdienst durch Senden einer beidseitig gerichteten Ereignisbenachrichtigung an den Abonnenten periodisch die Lieferung des Ereignisses überprüft, das der Abonnenten-Client-Anwendung zugeordnet ist.

9. Ereignis-Server nach Anspruch 8, wobei die Liefervariablen eine maximale Zeit für eine Lieferung eines Ereignisses an die Abonnenten-Client-Anwendung enthalten.

10. Ereignis-Server nach Anspruch 8, wobei jeder Eintrag in den Abonnement-Cache-Speicher für das durch den Eintrag identifizierte Abonnement einen Wert enthält, der die maximale Zeit zwischen periodischen Überprüfungen für die Lieferung von Ereignissen für das Abonnement angibt.

11. Ereignis-Server nach Anspruch 10, wobei der Eintrag für das Abonnement einen Wert enthält, der die Anzahl von Ereignissen, die zwischen Lieferungsüberprüfungen zu liefern sind, zusammen mit einem Zeitstempel für alle vorherigen Lieferungsüberprüfungen angibt.

12. Ereignis-Server nach Anspruch 8, wobei der Ereignis-Dienst den Abonnement-Cache-Speicher referenziert, um zu bestimmen, ob die nächste Ereignisbenachrichtigungsnachricht an ein Abonnement als eine einseitig gerichtete Nachricht oder als eine beidseitig gerichtete Nachricht gesendet werden soll.

13. Ereignis-Server nach Anspruch 8, wobei der Eintrag, der einem Abonnement entspricht, entfernt wird, wenn das Abonnement gekündigt wird.

14. Ereignis-Server nach Anspruch 8, wobei die Liefervariablen durch die Abonnenten-Client-Anwendung durch Spezifizieren einer Dienstqualität spezifiziert werden, wenn das Abonnement angefordert wird.

15. Computerlesbare Anweisungen zum Beibehalten eines ereignisbasierten Abonnements durch eine Abonnenten-Client-Anwendung (106) an einem Ereignisbenachrichtigungsdienst, wobei die Computerlesbare Anweisungen in einem Ereignis-Server implementiert sind, die dann, wenn sie durch den Ereignis-Server gelesen und ausgeführt werden, bewirken, dass der Ereignis-Server die folgenden Schritte ausführt:
Definieren einer Gruppe von Liefervariablen, die Standards für eine Ereignislieferung und administrative Grenzen definieren, wobei die Liefervariablen und die administrativen Grenzen dem Abonnement des Ereignisbenachrichtigungsdienstes zugeordnet sind;
Empfangen von Ereignissen von einer Versendungs-Client-Anwendung und Kommunizieren der Ereignisse an die Abonnenten-Client-Anwendung;
Abonnieren von Ereignissen, die durch den Ereignisbenachrichtigungsdienst über das Abonnement geliefert werden;
Verwenden eines Abonnement-Cache-Speichers, um die Ereignisse zu liefern, wobei der Abonnement-Cache-Speicher eine Karte von Abonnementkennungen auf Callback-Objektreferenzen enthält und wobei der Abonnement-Cache-Speicher auf einer dauerhaften Speichervorrichtung gespeichert ist;
periodisch Überprüfen der Lieferung der Ereignisse an die Abonnenten-Client-Anwendung gemäß den administrativen Grenzen; und
dann, wenn das periodische Überprüfen der Lieferung von Ereignissen ein Scheitern der Lieferung angibt, Kündigen des Abonnements;
wobei die Ereignisse an Abonnenten-Client-Anwendungen unter Verwendung von einseitig gerichteten Ereignisbenachrichtigungsnachrichten gesendet werden und wobei der Ereignis-Server durch Senden einer beidseitig gerichteten Ereignisbenachrichtigung an den Abonnenten periodisch die Lieferung des Ereignisses überprüft, das der Abonnenten-Client-Anwendung zugeordnet ist.

## Revendications

1. Procédé permettant le maintien d'un abonnement basé sur des événements par une application de client abonné (106) à un service de notification d'événements, le procédé étant mis en oeuvre sur un serveur d'événements, le procédé comprenant les étapes suivantes :
définition d'un jeu de variables de remise qui définissent des normes de remise d'événements et des limites administratives, les variables de remise et les limites administratives étant associées à un abonnement au service de notification d'événements ;
réception d'événements en provenance d'une application de client publieur (104) et communication desdits événements à ladite application de client abonné (106) ;
abonnement à des événements remis par ledit service de notification d'événements par le biais dudit abonnement ;
utilisation d'un cache d'abonnements pour la remise des événements, le cache d'abonnements comportant une table de correspondance d'identifiants d'abonnement avec des références d'objet de rappel, et ledit cache d'abonnements étant mémorisé sur un dispositif de mémorisation persistante ;
vérification périodique de la remise desdits événements audite application de client abonné (106) conformément auxdites limites administratives ; et,
si ladite vérification périodique de la remise d'événements indique un échec de remise, alors résiliation de l'abonnement ;
dans lequel lesdits événements sont remis à des applications de client abonné au moyen de messages de notification d'événements unidirectionnels, et dans lequel l'étape de vérification périodique comporte les étapes d'envoi et de vérification de la remise d'une notification d'événements bidirectionnelle à l'application de client abonné (106).

2. Procédé selon la revendication 1, dans lequel lesdites variables de remise comportent un temps maximal pour la remise d'un événement audite application de client abonné (106).

3. Procédé selon la revendication 1, dans lequel chaque entrée dans ledit cache d'abonnements comporte, pour l'abonnement identifié par ladite entrée, une valeur indiquant le temps maximal entre des vérifications périodiques pour la remise d'événements pour cet abonnement.

4. Procédé selon la revendication 3, dans lequel ladite entrée pour cet abonnement comporte une valeur indiquant le nombre d'événements à remettre entre des vérifications de remise, conjointement avec une estampille temporelle pour toutes vérifications de remise antérieures.

5. Procédé selon la revendication 1, comprenant en outre l'étape suivante :
référence au cache d'abonnements aux fins de déterminer s'il convient d'envoyer le prochain message de notification d'événements à un abonnement sous forme d'un message unidirectionnel ou d'un message bidirectionnel.

6. Procédé selon la revendication 1, dans lequel l'entrée correspondant à un abonnement est supprimée lors de la résiliation de cet abonnement.

7. Procédé selon la revendication 1, dans lequel les variables de remise sont stipulées par l'application de client abonné (106) par stipulation d'une qualité de service lors d'une demande d'abonnement.

8. Système serveur d'événements permettant le maintien d'un abonnement basé sur des événements par une application de client abonné (106) à un service de notification d'événements, le système serveur d'événements comprenant :
un jeu de variables de remise qui définissent des normes de remise d'événements et des limites administratives, les variables de remise et les limites administratives étant associées à un abonnement à le service de notification d'événements ;
un service d'événements (122) destiné à recevoir des événements en provenance d'une application de client publieur (124) et à communiquer lesdits événements à ladite application de client abonné (106) ;
un courtier en événements (120) en communication avec ledit service d'événements, destiné à traiter une demande d'abonnement à des notifications d'événements émanant d'un abonné et à apparier la notification desdits événements audit abonné par le biais le service d'événements ;
le service d'événements (122) en communication avec ledit courtier en événements, destiné à remettre des événements à un objet au niveau de ladite application de client abonné, et à vérifier périodiquement la remise desdits événements conformément à des limites administratives associées audit abonnement ; et,
un cache d'abonnements utilisé par le service d'événements pour remettre les événements, le cache d'abonnements comportant une table de correspondance d'identifiants d'abonnement avec des références d'objet de rappel, et ledit cache d'abonnements étant mémorisé sur un dispositif de mémorisation persistante ;
un temporisateur de vérification d'événements, destiné à maintenir un nombre de remises d'événements et à communiquer ledit nombre de remises d'événements audit service d'événements en vue de leur utilisation pour la vérification périodique de la remise ;
dans lequel lesdits événements sont remis à des applications de client abonné au moyen de messages de notification d'événements unidirectionnels, et dans lequel ledit service d'événements vérifie périodiquement la remise desdits événements associés audit abonnement en envoyant une notification d'événements bidirectionnelle à l'application de client abonné.

9. Serveur d'événements selon la revendication 8, dans lequel lesdites variables de remise comportent un temps maximal pour la remise d'un événement audite application de client abonné.

10. Serveur d'événements selon la revendication 8, dans lequel chaque entrée dans ledit cache d'abonnements comporte, pour l'abonnement identifié par ladite entrée, une valeur indiquant le temps maximal entre des vérifications périodiques pour la remise d'événements pour cet abonnement.

11. Serveur d'événements selon la revendication 10, dans lequel ladite entrée pour cet abonnement comporte une valeur indiquant le nombre d'événements à remettre entre des vérifications de remise, conjointement avec une estampille temporelle pour toutes vérifications de remise antérieures.

12. Serveur d'événements selon la revendication 8, dans lequel le service d'événements se réfère au cache d'abonnements aux fins de déterminer s'il convient d'envoyer le prochain message de notification d'événements à un abonnement sous forme d'un message unidirectionnel ou d'un message bidirectionnel.

13. Serveur d'événements selon la revendication 8, dans lequel l'entrée correspondant à un abonnement est supprimée lors de la résiliation de cet abonnement.

14. Serveur d'événements selon la revendication 8, dans lequel les variables de remise sont stipulées par l'application de client abonné par stipulation d'une qualité de service lors d'une demande d'abonnement.

15. Instructions lisibles par ordinateur permettant le maintien d'un abonnement basé sur des événements par une application de client abonné à un service de notification d'événements, les instructions lisibles par ordinateur étant mis en oeuvre sur un serveur d'événements, lesquelles instructions, une fois lues et exécutées par le serveur d'événements, amènent ledit serveur d'événements à accomplir les étapes suivantes :
définition d'un jeu de variables de remise qui définissent des normes de remise d'événements et des limites administratives, les variables de remise et les limites administratives étant associées audit abonnement à le service de notification d'événements ;
réception d'événements en provenance d'une application de client publieur et communication desdits événements à ladite application de client abonné ;
abonnement à des événements remis par ledit service de notification d'événements par le biais dudit abonnement ;
utilisation d'un cache d'abonnements pour la remise des événements, le cache d'abonnements comportant une table de correspondance d'identifiants d'abonnement avec des références d'objet de rappel, et ledit cache d'abonnements étant mémorisé sur un dispositif de mémorisation persistante ;
vérification périodique de la remise desdits événements audite application de client abonné conformément auxdites limites administratives ; et,
si ladite vérification périodique de la remise d'événements indique un échec de remise, alors résiliation de l'abonnement ;
dans lesquelles lesdits événements sont remis à des applications de client abonné au moyen de messages de notification d'événements unidirectionnels, et dans lesquelles ledit service d'événements vérifie périodiquement la remise desdits événements associés audit abonnement en envoyant une notification d'événements bidirectionnelle à l'application de client abonné.
